# EUROPÄISCHE PATENTSCHRIFT

(11) **EP 3 536 654 B1**
(45) Veröffentlichungstag und Bekanntmachung des Hinweises auf die Patenterteilung: **28.12.2022**
(21) Anmeldenummer: 19160882.7
(22) Anmeldetag: 05.03.2019
(51) Int. Cl.: B66F 9/075, B66F 9/24, G05G 9/047, B66F 9/20, B60K 37/06, B60K 35/00

(54) **FLURFÖRDERZEUG MIT EINEM FAHRERDISPLAY**
INDUSTRIAL TRUCK WITH A DRIVER'S DISPLAY
CHARIOT DE MANUTENTION DOTÉ D'UN AFFICHAGE CONDUCTEUR

(30) Priorität: 08.03.2018 DE 102018105410
(43) Veröffentlichungstag der Anmeldung: 11.09.2019
(73) Patentinhaber: Jungheinrich Aktiengesellschaft, 22047 Hamburg (DE)
(72) Erfinder: Heusinger, Sebastian, 22397 Hamburg (DE); Tozzi, Fabien, 22083 Hamburg (DE)
(74) Vertreter: Hauck Patentanwaltspartnerschaft mbB

(56) Entgegenhaltungen:
- EP-A1- 2 338 720
- EP-A1- 2 889 255
- EP-A1- 2 889 256
- EP-B1- 2 338 720
- DE-A1-102006 059 057
- DE-A1-102015 112 201

## Beschreibung

Die vorliegende Erfindung betrifft ein Flurförderzeug mit einem Fahrerdisplay und mindestens einem von Hand betätigbaren Bedienelement. Ferner ist eine Vielzahl von Funktionstasten dem von Hand betätigbaren Bedienelement räumlich benachbart zugeordnet.

Flurförderzeuge mit einem Bedienplatz für den Fahrer, beispielsweise Schubmaststapler oder andere Gabelstapler, besitzen häufig ein Fahrerdisplay, auf dem dem Fahrer Informationen zum aktuellen Betriebszustand des Fahrzeugs und/oder zu auszuführenden Fahrzeugfunktionen angezeigt werden. Ferner ist es bekannt, das Flurförderzeug mit einer Reihe von Funktionstasten auszustatten, deren Betätigung direkt eine vorbestimmte Fahrzeugfunktion auslöst. Derartige Funktionstasten ermöglichen dem Fahrer, Funktionen an dem Fahrzeug komfortabel zu bedienen, ohne mit einem Umgreifen am oder Loslassen vom Bedienelement Funktionen an dem Fahrerdisplay auszuwählen und durchzuführen.

Aus EP 2 993 155 B1 ist ein Flurförderzeug bekannt geworden, das mit einem Steuerungsrechner zur Ansteuerung von Fahr- und Arbeitsfunktionen sowie mit mindestens einer Anzeige- und Bedienvorrichtung ausgestattet ist. Für eine einfache Bedienung des Flurförderzeugs wird eine Hubhöhenvorwahl angeboten, bei der eine vorbestimmte Hubhöhe automatisch angefahren und deren Erreichen angezeigt wird. Über einen Steuerungsrechner wird in der Anzeige- und Bedienvorrichtung ein Menü zur Auswahl der gewünschten Hubhöhe angeboten, wobei durch den Bediener diese Vorauswahl abgeändert werden kann. Ferner ist es ebenfalls bekannt, freiprogrammierbare Favoritenschaltelemente vorzusehen, die mit einer Hubhöhe belegt werden können, wobei durch eine einzige Betätigung der Favoritenschaltelemente diese Hubhöhe auswählbar ist. Die Favoritenschaltelemente sind durch den Bediener mit einer Hubhöhe frei belegbar.

Aus EP 2 889 255 A1 ist ebenfalls ein Flurförderzeug gemäß dem Oberbegriff des Anspruchs 1 mit einem Bedienelement bekannt geworden. Das Bedienelement verfügt über Favoritenschaltelemente welche mehrfach mit Funktionen belegt werden können. Die Auswahl der auszuführenden Funktion erfolgt durch mehrmaliges kurzzeitiges Betätigen der Favoritentaste.

Als nachteilig an der mitunter sehr komplexen Ansteuerung von Flurförderzeugen hat sich herausgestellt, dass fest vorgegebene Funktionstasten die relevante Anzahl an abzurufenden Bedien- und Fahrzeugfunktionen nicht ausreichend abbilden können, ohne dass eine unübersichtliche Vielzahl an fest vorgegebenen Funktionstasten notwendig wird.

Der Erfindung liegt die Aufgabe zugrunde, ein Flurförderzeug mit einem Fahrerdisplay bereitzustellen, bei dem für eine ergonomische Bedienung eine Vielzahl von Fahrzeugfunktionen einfach und in sinnfälliger Weise aufgerufen werden können.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt ein Fahrerdisplay und mindestens ein von Hand betätigbares Bedienelement. Eine Vielzahl von Funktionstasten ist räumlich benachbart zu dem Bedienelement angeordnet, das beispielsweise einen Joy-Stick oder einen anderen Lenk-/Bedienhebel aufweisen kann. Die räumliche Nähe der Funktionstasten zu dem Bedienelement gestattet eine ergonomische Bedienung.

Erfindungsgemäß ist eine Umschalttaste für die Funktionstasten vorgesehen, bei deren Betätigung mindestens einer der Funktionstasten eine Zweitfunktion zugeordnet ist. Bevorzugt kann die Zweitfunktion für eine vorgestimmte Zeitspanne nach Betätigung der Umschalttaste über die entsprechende Funktionstaste aufgerufen werden. Alternativ zu der vorbestimmten Zeitspanne kann die Zweitfunktion auch dauerhaft über die entsprechende Funktionstaste aufgerufen werden bis die Umschalttaste erneut betätigt wird. Vorteilhafterweise bildet die Zweitfunktion eine fahrerspezifisch frei programmierbare Funktion, die vom Fahrer selbst, ohne Hinzuziehen eines Servicetechnikers oder einer anderen Hilfe entsprechend seinen Wünschen und Vorstellungen als Zweitfunktion einer Funktionstaste zugeordnet werden kann. Das erfindungsgemäße Flurförderzeug mit seinem Fahrerdisplay bietet hier eine Reihe von Möglichkeiten. Einerseits können, ohne die Anzahl der zu bedienenden Funktionstasten zu vergrößern, die Fahrzeugfunktionen, die bequem über eine Funktionstaste aufrufbar sind, verdoppelt werden. Wenn jede Funktionstaste mit einer Zweitfunktion belegt ist, dann stehen doppelt so viele Fahrzeugfunktionen zur Verfügung. Ein weiterer besonderer Vorteil besteht darin, dass die Zweitfunktion fahrerspezifisch gewählt werden kann. Bevorzugt ein erster Fahrer die Fahrzeugfunktion B als Zweitfunktion auf einer Funktionstaste A zu legen, so kann ein anderer Fahrer die Fahrzeugfunktion C auf dieselbe Funktionstaste legen. So entstehen Paare von Fahrzeugfunktionen (A, B), (B, C), die fahrerspezifisch als abhängig von dem am Fahrzeug angemeldeten Fahrer definiert sind.

In einer bevorzugten Weiterbildung ist die Umschalttaste ausgebildet, um durch eine Betätigung für mehr als eine vorbestimmte Mindestdauer in einen Programmiermodus zu wechseln. In dem Programmiermodus wird durch Aktivieren einer Betriebsfunktion und Betätigung einer zu belegenden Funktionstaste dieser die aktivierte Betriebsfunktion als Zweitfunktion zugewiesen. Bevorzugt erfolgt dies, indem nach einem Wechsel in den Programmiermodus durch Betätigen einer Funktionstaste, diese für eine Belegung ihrer Zweitfunktion aktiviert wird. Ist dann eine Betriebsfunktion ausgewählt und aktiviert, beispielsweise durch eine Auswahl über das Fahrerdisplay, so ist die Funktionstaste mit dieser Betriebsfunktion als Zweitfunktion belegt.

In einer weiter bevorzugten Ausgestaltung ist das Fahrerdisplay mit einem oder mehreren Bedienelementen ausgestattet. Die an dem Fahrerdisplay vorgesehenen Bedienelementen dienen dazu, über das Fahrerdisplay Fahrzeugfunktionen darzustellen und auszuwählen. Die über das Fahrerdisplay ausgewählten Fahrzeugfunktionen können direkt aktiviert oder als Zweitfunktion einer der Funktionstasten zugewiesen werden. Wichtig an der Auslegung der am Fahrerdisplay vorgesehenen Bedienelemente ist, dass die Auswahl einer Fahrzeugfunktion stets gleich funktioniert, unabhängig davon, ob die Fahrzeugfunktion eingeschaltet oder aktiviert werden soll oder ob diese als Zweitfunktion für eine Funktionstaste ausgewählt werden soll. Hierdurch ist eine intuitive Bedienung und auch eine intuitive Zuweisung von fahrerspezifischen Funktionen besonders gut möglich.

Erfindungsgemäß sind eine Speichereinheit und eine Fahreranmeldeeinheit vorgesehen. Hierbei ist vorgesehen, dass bei einem Anmelden eines Fahrers an der Fahreranmeldeeinheit seine fahrerspezifischen Zweitfunktionen aus der Speichereinheit geladen und bei einem Abmelden des Fahrers seine fahrerspezifischen Zweitfunktionen in der Speichereinheit gespeichert werden. Die Speichereinheit erlaubt es, die Zweitfunktionen für einen Fahrer jeweils bedarfsgerecht bereitzustellen und diese einer Fahrerperson zuzuordnen. Über die Fahreranmeldeeinheit wird die Fahrerperson identifiziert und die zugeordneten Zweitfunktionen werden abgerufen und bereitgestellt.

Eine weitere Ausgestaltung, die eine im hohen Maße intuitive Bedienung gestattet, besteht darin, dass bei einer Betätigung der Umschalttaste die zugewiesenen Zweitfunktionen in dem Fahrerdisplay dargestellt werden. Die Anzeige der einzelnen Funktionen im Display erfolgt bevorzugt nebeneinander in einer sinnfälligen Reihenfolge wie die Zweitfunktionen auf den Funktionstasten abgelegt sind. Durch das erneute Darstellen der Zweitfunktionen werden diese dem Fahrer in Erinnerung gerufen und so besser memoriert. Auch die intuitive Bedienung wird hierdurch erleichtert. Um Verwirrungen zu vermeiden, werden die Zweitfunktionen bevorzugt nur dargestellt, nachdem die Umschalttaste betätigt wurde. Bevorzugt kann durch eine erneute Betätigung der Umschalttaste die Darstellung der Zweitfunktionen beendet werden. Bevorzugt endet mit der erneuten Betätigung der Umschalttaste auch die Möglichkeit die Zweitfunktion durch Betätigung der Funktionstaste auszulösen.

In einer bevorzugten Weiterbildung der Erfindung ist die Umschalttaste räumlich benachbart zu dem Bedienelement angeordnet, derart, dass bevorzugt kein weites Umgreifen oder vollständiges Loslassen des Bedienelements erfolgen muss.

Eine bevorzugte Ausgestaltung der Erfindung wird nachfolgend an einem beispielhaften Flurförderzeug erläutert. Es zeigen:
- Fig. 1: eine perspektivische Ansicht von der Lastseite in die Fahrerkabine eines Schubmaststaplers, wobei der Hubmast nicht dargestellt ist,
- Fig. 2: eine Detailansicht mit Lenkeinheit und Bedienelement,
- Fig. 3: die Lenkeinheit mit dem Fahrerdisplay und mehreren beispielhaften Fahreranmeldeeinheiten als Zugangsmodule,
- Fig. 4: das Fahrerdisplay mit seinen Bedientasten und
- Fig. 5: die Funktionstasten mit einer zugehörigen Umschalttaste.

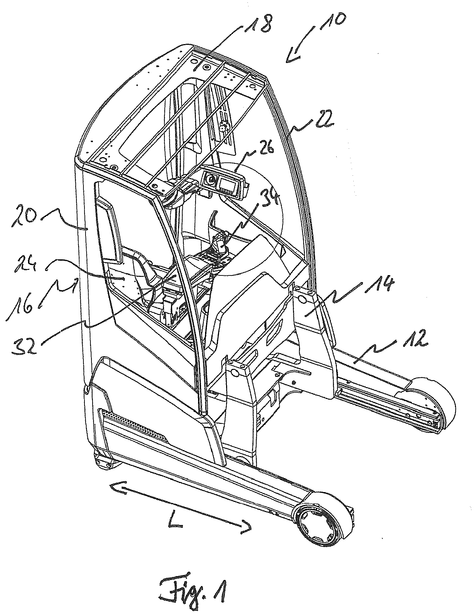

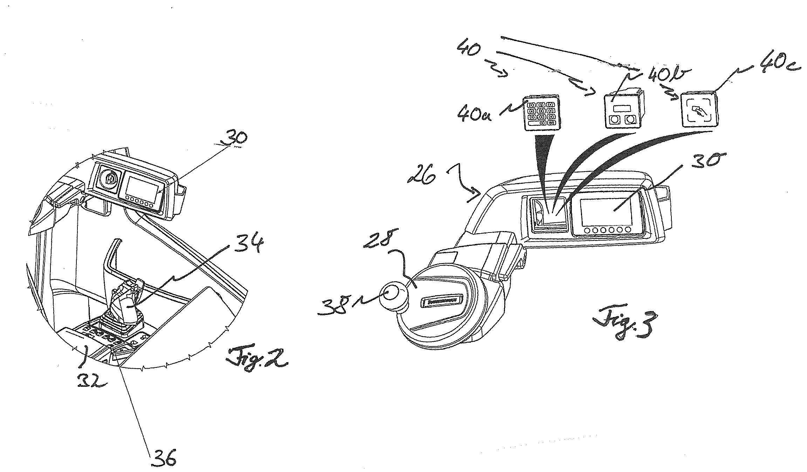

Fig. 1 zeigt einen Schubmaststapler 10 mit zwei vorstehenden Radarmen 12 und einem an diesen verschieblich gelagert Mastfuß 14. Zur besseren Übersicht ist der am Mastfuß 14 angeordnete Hubmast nicht dargestellt. Der Schubmaststapler 10 besitzt eine Fahrerkabine 16 mit einem Fahrerschutzdach 18, das von vier Säulen 20, 22 getragen ist. Die als A-Säulen ausgebildeten Säulen 20 liegen auf der von den Radarmen 12 fortweisenden Seite, während die B-Säulen 22 auf der zum Hubmast weisenden Seite der Fahrerkabine 16 vorgesehen sind. In der Fahrerkabine 16 ist ein Fahrersitz 24 angeordnet, der quer zu einer Fahrzeugslängsrichtung L orientiert ist. Die Querausrichtung des Fahrersitzes 24 bewirkt, dass der Fahrer bei einem Verfahren des Schubmaststaplers entlang der Fahrzeuglängsrichtung L sich seitlich bewegt. Dem Fahrersitz gegenüber ist eine Lenkeinheit 26 vorgesehen, die ein Lenkrad 28 (vgl. Fig. 3) sowie ein Fahrerdisplay 30 besitzt. In Fig. 1 ist ferner zu erkennen, dass seitlich des Fahrersitzes 24 auf der zum Mastfuß 14 weisenden Seite eine Armstütze 32 vorgesehen ist. Die Armstütze 32 dient zum Abstützen des Unterarms eines in dem Fahrersitz 24 sitzenden Fahrers. Mit der rechten Hand kann der Fahrer einen Bedienhebel 34 ergreifen und diesen betätigen.

Fig. 2 zeigt einen Ausschnitt aus Fig. 1, in dem der Bedienhebel 34 sowie das Fahrerdisplay 30 zu erkennen sind. Auf der Armstütze 32 liegt der rechte Unterarm der Bedienperson auf, wobei das Handgelenk zur besseren Beweglichkeit nicht aufliegt, sondern frei bleibt. Der Bedienhebel 34 kann ganz oder teilweise umgriffen werden. Auch ist es möglich, den Bedienhebel 34 nur mit den Fingerkuppen zu bewegen. Zwischen Armstütze 32 und Bedienhebel 34 ist ein Feld 36 mit Funktionstasten angeordnet. Das Feld 36 ist derart angeordnet, dass es auch mit einem auf der Armstütze 32 liegenden Unterarm bedient werden kann. Zur Bedienung werden die Funktionstasten in dem Feld 36 beispielsweise mit dem Zeigefinger oder dem Mittelfinger gedrückt, bleibt die Hand auf dem Bedienhebel liegen, kann auch der Daumen für die Funktionstasten benutzt werden. Auch ist es möglich, mit einer Hand die Funktionstasten 36 zu betätigen, während weitere Finger den Bedienhebel 34 betätigen.

Fig. 3 zeigt die Lenkeinheit 26 im Detail. Die Lenkeinheit 26 besitzt ein Lenkrad 28, das beispielsweise über einen Knauf 38 ergriffen und gedreht werden kann. Bevorzugt befindet sich der Knauf 38 in der linken Position bei 9-Uhr, die eine Bedienung mit Hilfe der linken Hand erleichtert. Ferner ist in der Lenkeinheit eine Fahreranmeldeeinheit 40 vorgesehen. Fig. 3 zeigt drei verschiedene Fahreranmeldeeinheiten, wobei eine Tastatur 40a zur Eingabe einer PIN vorgesehen sein kann. Als Fahreranmeldeeinheit kann auch ein Kartenlesegerät 40b vorgesehen sein, das eine fahrerspezifische Identifikationskarte ausliest. Eine weitere Option für eine Fahreranmeldeeinheit ist das dargestellte Chiplesegerät 40c, das beispielsweise eine persönliche Fahrerchipkarte ausliest, wobei hier unterschiedliche Techniken für den Datenaustausch vorgesehen sein können, beispielsweise eine Transponderkarte, RFID oder eine andere Nahfeldkommunikation.

Eines der drei Fahreranmeldeeinheiten wird in die Lenkeinheit 26 eingesetzt und mit dem Fahrzeug und seiner Steuerung verbunden.

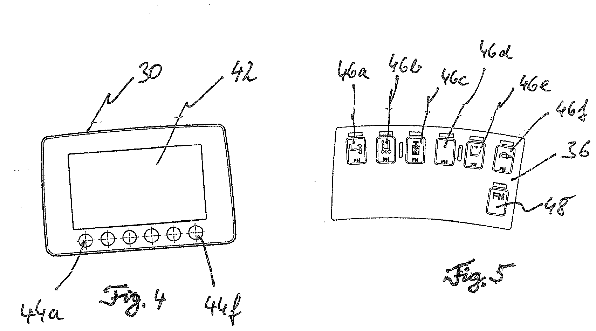

Das Fahrerdisplay 30 besitzt, wie in Fig. 4 dargestellt, eine Anzeige 42, die beispielsweise auch als berührungsempfindlicher Schirm (Touchscreen) ausgebildet sein kann. Unterhalb der Anzeige 42 sind sechs Bedienelemente 44a - f vorgesehen, die als Druckknöpfe ausgebildet sind. Mithilfe der Druckknöpfe können in einer sinnfälligen Menüführung Betriebsgrößen und Fahrzeugfunktionen angezeigt und ausgewählt werden. Auch kann vorgesehen sein, dass die Bedienelemente unterhalb der Anzeige 42 mit festen Funktionen für die Bedienung des Fahrzeugs belegt sind.

Die Bedienelemente 44 an der Lenkeinheit 26 sind jedoch so für den Fahrer angeordnet, dass diese nicht gleichzeitig mit dem Bedienhebel 34 betätigt werden können, sondern der Bedienhebel 34 losgelassen werden muss, um diese zu betätigen (bei Einhandbedienung).

Fig. 5 zeigt das Feld 36 mit den Funktionstasten 46a bis 46f, die einzeln mit einer fest vorkonfigurierten Funktion belegt sind. Die Funktionstaste 46a richtet beispielsweise die Lastgabel horizontal aus, die Funktionstaste 46b richtet einen Seitenschieber mittig am Fahrzeug aus. Über die Funktionstaste 46c wird eine Wiegefunktion am Fahrzeug ausgelöst, Funktionstaste 46e richtet das Lastaufnahmemittel mittig zwischen den Lastarmen eines Flurförderzeugs aus, um Kollisionen beim Absenken zu vermeiden. Funktionstaste 46f definiert eine Schleichfahrt für das Fahrzeug. Funktionstaste 46d ist in dem dargestellten Ausführungsbeispiel nicht definiert. Zusätzlich zu den Funktionstasten 46 ist eine Umschalttaste 48 vorgesehen. Die Umschalttaste 48 aktiviert die Zweitfunktion für die Funktionstasten. So kann beispielsweise über die Umschalttaste 48 die Zweitfunktion für eine vorbestimmte Zeitdauer, beispielsweise für einige Sekunden, aktiviert werden. In dieser Zeitspanne werden die Zweitfunktionen in der Anzeige 42 dargestellt. Alternative zu der vorbestimmten Zeitspanne ist es auch möglich, dass Umschalttaste 48 die Zweitfunktionen so lange aktiviert, bis die Umschalttatse erneut gedrückt wird.

Ist die Umschalttaste aktiviert, so kann beispielsweise als eine Zweitfunktion zur horizontal ausgerichteten Lastgabel mit ihrer Funktionstaste 46a eine auf das Lastteil gerichtete Beleuchtung vorgesehen sein. In diesem Fall betätigt die Bedienperson zunächst die Funktionstaste 46a, um die Lastgabel horizontal auszurichten und nachfolgend die Umschalttaste 48, um durch erneutes Betätigen der Funktionstaste 46a die auf die Lastgabeln gerichtete Beleuchtung zu aktivieren. Ähnlich sinnfällig kann die Zweitfunktion beispielsweise auch bei der Schleichfahrt mit der Funktionstaste 46f belegt sein. So kann als Zweitfunktion für die Schleichfahrt vorgesehen sein, dass eine Rundumbeleuchtung an dem Fahrzeug eingeschaltet wird, um andere Teilnehmer auf die Schleichfahrt aufmerksam zu machen.

Bei dem Einsatz des erfindungsgemäßen Fahrzeugs können verschiedene Bediensituationen unterschieden werden:

### - Betätigung der Zweitfunktion:

Wenn die Umschalttaste 48 nicht eingeschaltet ist, so kann diese durch einen Tastendruck auf das Tastenfeld eingeschaltet werden. Eine etwaige vorgesehene LED zeigt optisch die aktivierte Umschalttaste 48 an. Ist die Umschalttaste 48 eingeschaltet, so werden auf der Anzeige 42 die für die Funktionstasten 46 abgespeicherten Zweitfunktionen in Symbolen sinnfällig dargestellt. Die Positionierung der Symbole entspricht dabei der Reihenfolge der Funktionstasten 46. Wird nun eine der Funktionstasten 46 betätigt, so wird nicht die primär hinterlegte Funktion ausgeführt, sondern die hinterlegte Zweitfunktion gelangt zur Ausführung. Mit der Betätigung der Funktionstaste geht die Umschalttaste wieder in ihre Ausgangssituation, der nicht betätigten Umschalttaste zurück.

### - Belegen der Zweitfunktion:

Zur Belegung der Zweitfunktion wird die Umschalttaste für eine bestimmte Zeitdauer, beispielsweise für länger als 3 Sekunden, durchgehend gedrückt. Durch das Gedrückthalten der Umschalttaste fangen beispielsweise alle Funktionstasten 46 an zu blinken. Ist eine der Funktionstasten bereits mit einer Zweitfunktion belegt, so kann diese auch in der Anzeige 42 dargestellt werden. Von den Funktionstasten 46, sei es, dass diese noch nicht mit einer Zweitfunktion belegt sind oder bereits mit einer Zweitfunktion belegt sind, wird eine durch Betätigen der Funktionstaste ausgewählt. Nachfolgend kann bevorzugt über die Bedientasten 44 an der Anzeige 42 eine spezielle Funktion in dem Menü ausgewählt und für die ausgewählte Funktionstaste als Zweitfunktion aktiviert werden. Beispielsweise kann in einem Untermenü eine Rundumbeleuchtung für das Fahrzeug aktiviert werden. Wird diese Funktion in der Anzeige 42 aktiviert, so wird diese Funktion als Zweitfunktion der zuvor ausgewählten Funktionstaste abgelegt. Die Umschalttaste kehrt danach in ihre Ausgangslage zurück und der Belegungsvorgang ist abgeschlossen. Die Zweitfunktionen sind durch den Fahrer selbst programmierbare Funktionen, bei deren Auswahl und Festlegung der Fahrer keiner externen Unterstützung bedarf.

### - Personenspezifische Zweitfunktion:

Zur Betätigung des Flurförderzeugs identifiziert sich der Fahrer an einer Erkennungseinheit. Dies kann über eine PIN, eine Identifikationskarte oder einen Chip erfolgen. Mithilfe dieser persönlichen Anmeldung kann ein personenspezifisches Benutzerprofil aktiviert werden. Dies beinhaltet beispielsweise die Zweitfunktionen für die Funktionstasten. Ändert die Bedienperson, solange sie am Fahrzeug angemeldet ist, ihre Belegung der Zweitfunktion, so wird diese beim Abmelden oder Verlassen des Fahrzeugs gespeichert und steht beim nächsten Anmeldevorgang automatisch für den Fahrer wieder zur Verfügung.

### Bezugszeichenliste

- 10: Schubmaststapler
- 12: Radarme
- 14: Mastfuß
- 16: Fahrerkabine
- 18: Fahrerschutzdach
- 20: A-Säulen
- 22: B-Säulen
- 24: Fahrersitz
- 26: Lenkeinheit
- 28: Lenkrad
- 30: Fahrerdisplay
- 32: Armstütze
- 34: Bedienhebel
- 36: Feld mit Funktionstasten
- 38: Knauf
- 40: Fahreranmeldeeinheit
- 40a: Tastatur
- 40b: Kartenlesegerät
- 40c: Chiplesegerät
- 42: Anzeige
- 44a-f: Bedienelemente
- 46a-f: Funktionstasten
- 48: Umschalttaste

## Patentansprüche

1. Flurförderzeug mit einem Fahrerdisplay (30) und mindestens einem von Hand betätigbaren Bedienelement (34), dem eine Vielzahl (36) von Funktionstasten (46) zugeordnet ist,
**dadurch gekennzeichnet, dass**
eine Umschalttaste (48) für die Funktionstasten (46) vorgesehen ist, bei deren Betätigung mindestens einer der Funktionstasten (46) eine jeweilige Zweitfunktion zugeordnet ist, wobei die Zweitfunktion eine vom Fahrer selbst programmierbare Funktion ist und eine Speichereinheit und eine Fahreranmeldeeinheit (40) vorgesehen sind, wobei beim Anmelden eines Fahrers an der Fahreranmeldeeinheit (40) seine fahrerspezifischen Zweitfunktionen aus der Speichereinheit geladen und bei einem Abmelden des Fahrers seine fahrerspezifischen Zweitfunktionen in der Speichereinheit gespeichert werden.

2. Flurförderzeug nach Anspruch 1, **dadurch gekennzeichnet, dass** die Umschalttaste (48) ausgebildet ist, durch eine Betätigung für mehr als eine vorbestimmte Mindestdauer in einen Programmiermodus zu wechseln, in dem durch Aktivieren einer Betriebsfunktion und Betätigen einer zu belegenden Funktionstaste (46), dieser die aktivierte Betriebsfunktion als Zweitfunktion zugewiesen werden kann.

3. Flurförderzeug nach Anspruch 1 oder 2, **dadurch gekennzeichnet, dass** das Fahrerdisplay (30) mit einem oder mehreren Bedienelementen (44) ausgestattet ist, deren Betätigung eine über das Fahrerdisplay (30) ausgewählte Fahrzeugfunktion aktivieren oder als Zweitfunktion einer der Funktionstasten (46) zuweisen kann.

4. Flurförderzeug nach einem der Ansprüche 1 bis 3, **dadurch gekennzeichnet, dass** bei einer Betätigung der Umschalttaste (48) die zugewiesenen Zweitfunktionen in dem Fahrerdisplay (30) dargestellt werden.

5. Flurförderzeug nach Anspruch 4, **dadurch gekennzeichnet, dass** die zugewiesenen Zweitfunktionen mindestens für eine vorbestimmte Zeitspanne dargestellt werden.

6. Flurförderzeug nach Anspruch 4 oder 5, **dadurch gekennzeichnet, dass** durch eine erneute Betätigung der Umschalttaste (48) die Darstellung der Zweitfunktionen beendet wird.

7. Flurförderzeug nach einem der Ansprüche 1 bis 6, **dadurch gekennzeichnet, dass** durch eine erneute Betätigung der Umschalttaste (48) die Möglichkeit zum Abruf der Zweitfunktion beendet wird.

8. Flurförderzeug nach einem der Ansprüche 1 bis 7, **dadurch gekennzeichnet, dass** die Umschalttaste (48) räumlich benachbart zu dem Bedienelement (34) angeordnet ist.

9. Flurförderzeug nach einem der Ansprüche 1 bis 8, **dadurch gekennzeichnet, dass** bei einer Betätigung der Umschalttaste (48) die Zweitfunktionen für die Funktionstasten für eine vorbestimmte Zeitspanne aufrufbar sind.

## Claims

1. An industrial truck with a driver's display (30) and at least one manually actuatable control element (34), to which a plurality (36) of function buttons (46) is assigned,
**characterized in that**
a switching button (48) for the function buttons (46) is provided, upon the actuation of which at least one of the function buttons (46) is assigned a respective second function, wherein the second function is a function that can be programmed by the driver himself, and a memory unit and a driver login unit (40) are provided, wherein when a driver logs in to the driver login unit (40) his driver-specific second functions are loaded from the memory unit, and when the driver logs out his driver-specific second functions are stored in the memory unit.

2. The industrial truck according to claim 1, **characterized in that** the switching button (48) is designed, when actuated for more than a predetermined minimum duration, to switch to a programming mode in which, by activating an operating function and actuating a function button (46) to be set, this button can be assigned the activated operating function as a second function.

3. The industrial truck according to claim 1 or 2, **characterized in that** the driver's display (30) is equipped with one or more control elements (44), the actuation of which can activate a vehicle function selected via the driver's display (30) or assign it as a second function of one of the function buttons (46).

4. The industrial truck according to one of claims 1 to 3, **characterized in that**, when the switching button (48) is actuated, the assigned second functions are displayed on the driver's display (30).

5. The industrial truck according to claim 4, **characterized in that** the assigned second functions are displayed at least for a predetermined time span.

6. The industrial truck according to claim 4 or 5, **characterized in that** actuating the switching button (48) again ends the displaying of the second functions.

7. The industrial truck according to one of claims 1 to 6, **characterized in that** actuating the switching button (48) again ends the possibility of calling up the second function.

8. The industrial truck according to one of claims 1 to 7, **characterized in that** the switching button (48) is arranged spatially adjacent to the control element (34).

9. The industrial truck according to one of claims 1 to 8, **characterized in that**, when the switching button (48) is actuated, the second functions for the function buttons can be called up for a predetermined time span.

## Revendications

1. Chariot de manutention doté d'un affichage conducteur (30) et d'au moins un élément de commande (34) actionnable manuellement, auquel sont attribués une pluralité (36) de boutons de fonction (46),
**caractérisé en ce que**
il est prévu un bouton de commutation (48) pour les boutons de fonction (46), dont l'actionnement attribue une fonction secondaire respective à l'un au moins des boutons de fonction (46), dans lequel la fonction secondaire est une fonction susceptible d'être programmée par le conducteur lui-même et il est prévu une unité de mémoire et une unité de connexion de conducteur (40), dans lequel, lors d'une inscription d'un conducteur sur l'unité de connexion de conducteur (40), ses fonctions secondaires spécifiques au conducteur sont récupérées à partir de l'unité de mémoire et lors d'une déconnexion du conducteur, ses fonctions secondaires spécifiques au conducteur sont enregistrées dans l'unité de mémoire.

2. Chariot de manutention selon la revendication 1, **caractérisé en ce que** le bouton de commutation (48) est conçu pour basculer dans un mode de programmation par un actionnement pour plus d'une durée minimale prédéfinie, dans lequel, par activation d'une fonction opérationnelle et actionnement d'un bouton de fonction (46), la fonction opérationnelle activée peut être attribuée à celui-ci en tant que fonction secondaire.

3. Chariot de manutention selon la revendication 1 ou 2, **caractérisé en ce que** l'affichage conducteur (30) est équipé d'un ou de plusieurs éléments de commande (44), dont l'actionnement peut activer une fonction de véhicule sélectionnée par le biais de l'affichage conducteur (30) ou attribuer celle-ci à un bouton de fonction (46) en tant que fonction secondaire.

4. Chariot de manutention selon l'une des revendications 1 à 3, **caractérisé en ce que** lors d'un actionnement du bouton de commutation (48), les fonctions secondaires attribuées sont représentées sur l'affichage conducteur (30).

5. Chariot de manutention selon la revendication 4, **caractérisé en ce que** les fonctions secondaires attribuées sont représentées au moins pour un laps de temps prédéfinie.

6. Chariot de manutention selon la revendication 4 ou 5, **caractérisé en ce qu'**un nouvel actionnement du bouton de commutation (48) met fin à la représentation des fonctions secondaires.

7. Chariot de manutention selon l'une des revendications 1 à 6, **caractérisé en ce qu'**un nouvel actionnement du bouton de commutation (48) met fin à la possibilité d'accéder à la fonction secondaire.

8. Chariot de manutention selon l'une des revendications 1 à 7, **caractérisé en ce que** le bouton de commutation (48) est disposé de façon adjacente à l'élément de commande (34).

9. Chariot de manutention selon l'une des revendications 1 à 8, **caractérisé en ce que** lors d'un actionnement du bouton de commutation (48), les fonctions secondaires pour les boutons de fonction sont accessibles pour un laps de temps prédéfini.
